# EUROPEAN PATENT SPECIFICATION

(11) **EP 2 310 670 B1**
(45) Date of publication and mention of the grant of the patent: **24.07.2013**
(21) Application number: 09766890.9
(22) Date of filing: 17.06.2009
(51) Int. Cl.: F03D 1/00, F03D 11/04

(54) **SUPPORT STRUCTURE FOR USE IN THE OFFSHORE WIND FARM INDUSTRY**
STÜTZSTRUKTUR ZUR VERWENDUNG IN DER OFFSHORE-WINDPARKINDUSTRIE
STRUCTURE DE SUPPORT DESTINÉE À ÊTRE UTILISÉE DANS L'INDUSTRIE DES PARCS ÉOLIENS MARITIMES

(30) Priority: 20.06.2008 NO 20082860
(43) Date of publication of application: 20.04.2011
(73) Proprietor: Seatower AS, 0364 Oslo (NO)
(72) Inventor: KARAL, Karel, deceased (NO); RAMSLIE, Sigurd, Quinns Rocks WA 6030 (AU); KARAL, Eva, 0778 Oslo (NO)
(74) Representative: Protector IP Consultants AS
(86) International application number: PCT/NO2009/000226
(87) International publication number: WO 2009/154472

(56) References cited:
- EP-A1- 1 526 278
- WO-A1-01/34977
- WO-A1-03/004870
- WO-A2-2004/055272
- DE-U1- 20 310 992
- US-A1- 2004 262 926

## Description

The present invention relates to structures for supporting offshore wind turbines and similar equipment. More specifically, the invention relates to a support structure for use in the offshore wind farm industry, comprising a foundation for installation on a seabed below a body of water and a tower connected to and extending upwards from the foundation and being capable of supporting at least an equipment unit, according to the preamble of claim 1; as well as a method of installing the support structure according to claim 11.

The increasing demand of exploitation of renewable energy sources enhances the demand of offshore wind power generation where the wind conditions are more favorable than onshore and the environmental impact is much less. There is an increasing need for structures that can support heavy wind turbines in a significant height over the sea level. The support structure consists of shaft/tower fixed to the seabed either directly by means of a foundation or the structure is made floating and connected to the seabed by means of a mooring. The present invention relates to the former type, namely the fixed support structures.

Typical fixed support structures for wind turbines applied in practice, planned for application, patented and described in publicly accessible sources are, in general terms characterized by the following:
1. Demanding installation where the tower is deployed in-situ on a preinstalled foundation
2. The foundation is fixed to the seabed by driven or drilled piles

Existing solutions using the gravity force to fix the structure to the seabed instead of piles are known for their considerable limits of application related to their weight, water depth at the installation site as well as water depth at the load-out locations and along the transport route.

WO 01/34977 shows a gravity based foundation structure that has a completely flat bottom. This requires careful preparation of the seabed at the installation site. The ground has to be levelled and it has to be ensured that the soil is stable and will not shift substantially when the weight of the foundation is transferred to the seabed. If the seabed is not prepared properly, the windmill may in worst case topple over.

US 2004/262926 shows a foundation that is not adapted to be self floating. It has a flat underside and has in this respect the same disadvantages as WO 01/34977.

EP 1 429 024 discloses a support structure for an offshore wind turbine, comprising a caisson supported by several columns embedded in the seabed and subjected to tension and pressure loads. Selected columns are piled at an inclined angle with respect to the vertical. The caisson is supported below the water surface but above the seabed.

WO 03/080939 discloses a foundation structure for a wind turbine tower or similar, for installation on the seabed. The foundation structure can be manoeuvred to its offshore position using a vessel and separate (and removable) buoyancy means These buoyancy elements must be rather large in order to maintain stability. When in position, the structure is lowered to the seabed and a pumping mechanism is used to sink a lower portion of the structure (e.g. skirts) into the seabed. When the foundation structure has been anchored (or piled) in position on the seabed, it is capable of supporting the wind turbine tower.

By their nature, the above solutions tend to yield high overall capital investment costs, i.e. the total costs for fabrication, load-out, transport and installation

It is therefore provided a support structure for use in the offshore wind farm industry, comprising a foundation for installation on a seabed below a body of water and a tower connected to and extending upwards from the foundation and being capable of supporting at least an equipment unit, characterized in that the foundation comprises a circumferential skirt extending downwards from the bottom slab element, and defining at least one compartment underneath the foundation, the weight of the foundation, including the ballast, creating a sufficient force for the skirt to penetrate into the seabed so that the outer loads is transferred into deeper soils. Preferably, the at least one compartment is subdivided into compartments by means of skirts extending downwards from the bottom slab element and preferably extending radially from a center portion of the bottom slab element to respective areas of the circumferential skirt.

The tower is preferably connected to the foundation via a lower part of the tower being attached to the bottom slab element and connected to the foundation via fixing elements connected to at least an upper wall portion.

In an embodiment, the foundation comprises a roof structure, extending between the upper wall and the tower, thereby enclosing the first cavity In one embodiment, the roof structure comprises an outer shell and an inner shell defining at least one second cavity there between, said inner shell facing the first cavity. The second cavity is preferably filled with a material such as concrete. In another embodiment, the roof structure is formed by concrete cast in conventional formwork, or by single shell metal plates.

In one embodiment, the bottom slab element and the wall comprise an outer shell and an inner shell defining at least one second cavity there between, said inner shell facing the first cavity. The second cavity is preferably filled with a material such as concrete. In another embodiment, the upper wall is formed by slipform casting or by single shell metal plates.

In one embodiment, the support structure comprises a floating stability element releasably and slidably connected to the foundation, whereby the stability of the structure is maintained during tow, and during installation when the roof structure is moved from a position above the water to a partly or fully submerged state. Preferably, the floating stability element comprises a recessed portion having upper and lower end stops for cooperation with a flange on the foundation, whereby the floating stability element slidable movement is restricted by said upper and lower end stops. Also, the floating stability element preferably comprises at least one inner cavity for selective addition and extraction of a ballasting fluid, such as water.

It is also provided a method of installing the invented support structure, characterized by the steps of:
adding ballast having a sufficient weight to let a downward facing skirt, extending around the circumference of the foundation, penetrate the seabed so that the outer loads is transferred into deeper soils.

If deemed necessary, the method installing comprises moving the foundation into a substantially level state by injecting a grouting material into selected ones of the compartments confined by the skirts below the bottom slab element.

The present invention introduces a number of parameters and structural compatibility by using different material types that can be applied for optimizing the supply of ready-for-operation structural supports for offshore wind farms. The following advantageous aspects are achieved:
1. Large degree of completion and commissioning work can be done at the fabrication site instead at the offshore installation site, allowing integration of the tower to the foundation, cabling work and similar
2. Wider material selection and range of structural dimensions
3. Transport to the site on deck of barges and vessels is eliminated or significantly reduced
4. Separate buoyancy elements during tow-out are not required
5. Deployment into the position (transfer from the transport position to the operation position) by adding ballast, not by lifting
6. No piling or other forms of "fixing" to the seabed is needed
7. Design and outfitting for removal can be easily implemented
8. Need for large offshore cranes is avoided

In addition to lower overall costs the present invention resolves shortcomings associated with the known solutions by:
1. Enabling delivery of the supports from fabrication sites allowing operation of shallow draft vessels thus widening the selection of fabrication sites
2. Reducing needs for specialized vessels
3. Allowing superstructure (tower, wind generator, etc) to be fitted to foundation structure at shore, prior to tow to installation location
4. Allowing foundation structure to be leveled following installation on seabed, to prevent unpredictable inclination of the installed support
5. Reducing or eliminating hydrodynamic loads acting directly on the tower
6. Resistance to heavy ice loads

These and other characteristics of the invention will be clear from the following description of a preferential form of embodiment, given as a non-restrictive example, with reference to the attached drawings wherein:
Figure 1 is a schematic side view of a first embodiment of the invention, illustrating the principle of the invention where a portion of the foundation is protruding above the water surface;
Figure 2 is a section through a lower part of the structure shown in figure 1, along the section line A-A in figure 3;
Figure 3 is a section along the section line B-B in figure 2;
Figure 4 is a schematic side view of a second embodiment of the invention, illustrating the principle of the invention where a portion of the foundation is below the water surface
Figure 5 is a section through a lower part of the structure shown in figure 4, along a section line similar to section line A-A in figure 3;
Figure 6 is a section through a lower portion of the foundation structure, along a section line similar to section line A-A in figure 3, placed on shore;
Figure 7 is a cut out of lower portion of the foundation structure illustrating composition of the main load bearing plate elements;
Figure 8 is a side view of the lower portion of the foundation structure shown in figure 6, while being lifted from shore;
Figure 9 is a side view of the lower portion of the foundation structure shown in figure 6, floating on water;
Figure 10 shows the embodiment shown in figure 5, in a floating state on water and partially filled with ballast;
Figures 11 to 13 show the main operations in the transport and installation of the support structure;
Figure 14 is a horizontal section at through line C-C in figure 15, and shows the second embodiment of the invention fitted with a reusable floating stability device;
Figure 15 is a section through a lower part of the structure shown in figure 4, along the section line A-A in figure 14, floating in the water and fitted with a reusable floating stability device;
Figure 16 shows the same structure and floating stability device as in Fig. 14, but where the floating stability device is shown in a state detached from the floating supporting structure, e.g. prior to attachment to the structure;
Figure 17 shows a vertical section of the same structure and floating stability device as in Fig. 15 during lowering to seabed; and
Figure 18 shows the same structure and floating stability device as in Figures 15 and 17, where the structure has been deployed onto seabed and the floating stability device has been flooded for detaching from the structure and further retrieval.

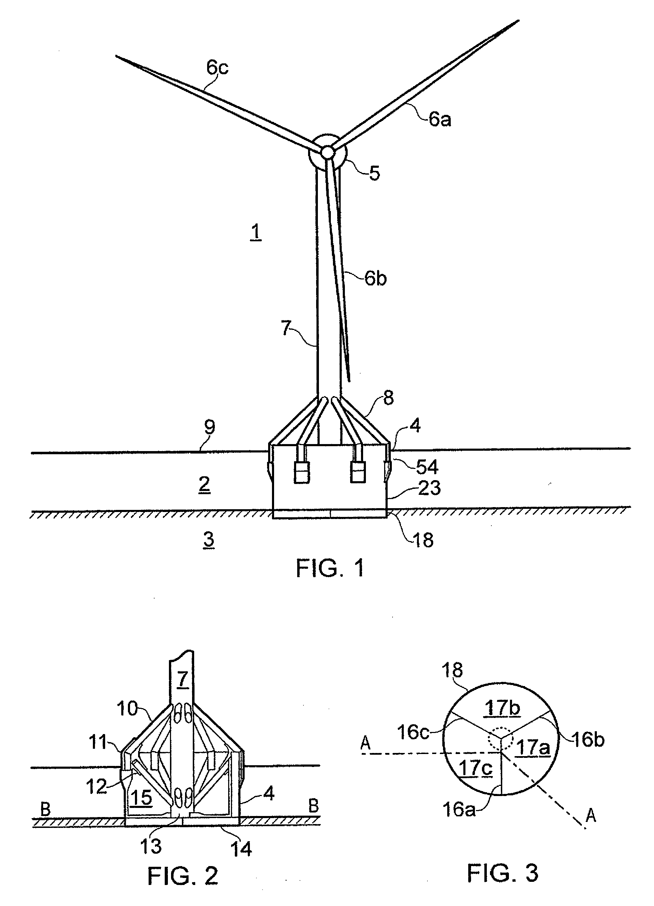

Figure 1 is a side view of a first embodiment of the support structure, generally denoted by the reference numeral 1 and hereinafter also referred to as a "structure". The support structure 1, which comprises a tower 7 and a foundation 4 is illustrated placed in a body of water 2 and resting on a seabed 3 via the foundation 4. The support structure supports a turbine 5 with rotor blades 6a-c. The turbine is mounted on top of the tower 7 that is supported by and fixed to the foundation 4 by means of a fixing structure 8. In this embodiment the foundation 4 protrudes above the water level 9, which is a typical arrangement for sites in shallow water. The foundation 4 comprises a bottom slab element 14 (see figure 2) and a wall extending upwards from the bottom slab element For reasons which will become apparent later, when the manufacturing process is described, the foundation wall is conveniently denoted "lower wall 23" and upper wall 54", as indicated in figure 1.

Although not mandatory, it is advantageous to give the foundation 4 a circular shape that can efficiently resist environmental loads in various phases during fabrication, transport and operation; typically hydrostatic water pressure, wave loads and - in some cases -, ice loads. The tower 7 is fixed to the foundation by means of a multiple-legged structure 8.

Figure 2 is a vertical section through the foundation 4 along two vertical planes A-A as shown in Fig. 3, The multiple-legged fixing structure 8, fixing the tower 7 to the foundation 4 comprises upper struts 10, vertical columns 11 and - if necessary - lower struts 12. A lower part 13 of the tower 7 may be embedded into the bottom slab element 14 of the foundation in order to facilitate transfer of shear loads from the tower 7 into the foundation The space 15 inside the foundation 4 is used to control the buoyancy and center of gravity of the structure during fabrication, transport to the field and installation by being either air-filled or, to certain degree either filled by water or solid ballast or combination water and solid ballast.

Figure 3 is a horizontal section along section line B-B in Fig. 2, through the part of the foundation that is embedded in soil when the structure has been installed. Radical skirts 16 divide the confined space within the outer (circular) skirt 18 into a number of compartments 17. As an example, figure 3 shows three such compartments 17a-c, divided by radial skirts 16a-c. The skirts improve the load bearing capacity of the foundation by transferring the outer loads into deeper soils strata, and the outer skirt prevents deteriorating effects from possible scour of the seabed along the periphery Upon embedding the skirts into seabed, grout or similar substance is filled into the compartments 17a-c in order to avoid water filled pockets to be trapped between bottom of the foundation and seabed. Grouting can be utilized to ensure that the foundation 4 is leveled (horizontally) and thereby ensuring verticality of the tower by controlling the grouting pressure thus the inserted grout volume in the individual compartments 17a-c. Dividing the base into three individual compartments as shown in figure 3 or into multiple of three groups of pressure-connected compartments, the leveling can be accomplished

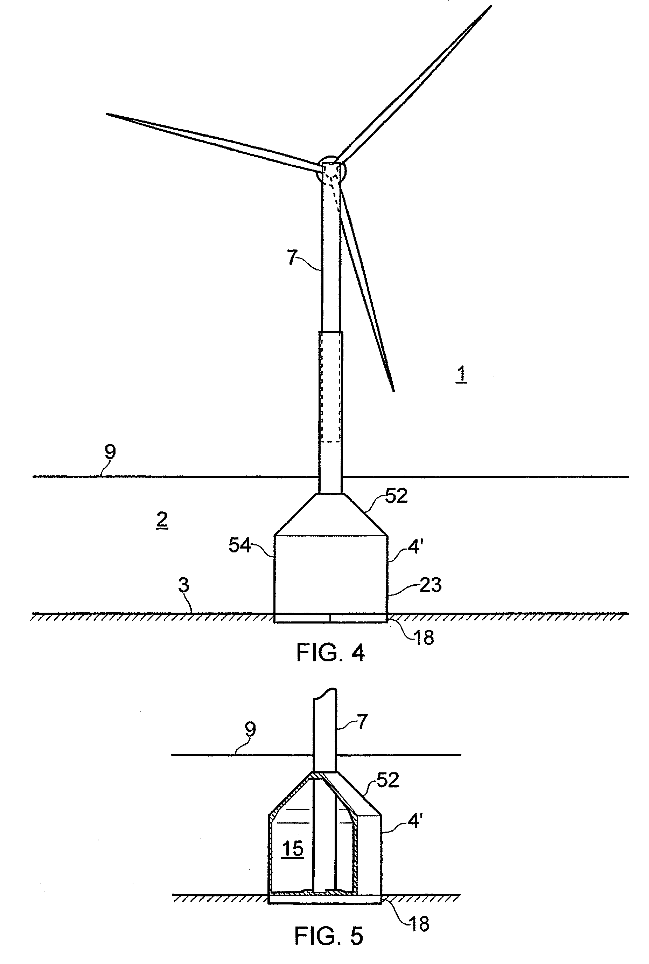

Figure 4 is a side view of a second embodiment of the support structure 1 placed in a body of water 2 and resting on a seabed 3 via a foundation 4'. In this embodiment the foundation 4' does not protrude above the water level 9 This is a typical arrangement for sites in deeper waters where this arrangement is less costly compared to the structure shown in Fig 1, and this embodiment of the foundation 4' comprises a roof structure 52, connected to the upper wall 54 and thus enclosing the internal space 15 (see figure 5). The skilled person will understand that the transition between the tower 7 and the roof structure 52 may - if required - be sealed by conventional means The roof structure 52 is preferably slanted, as shown in figure 4.

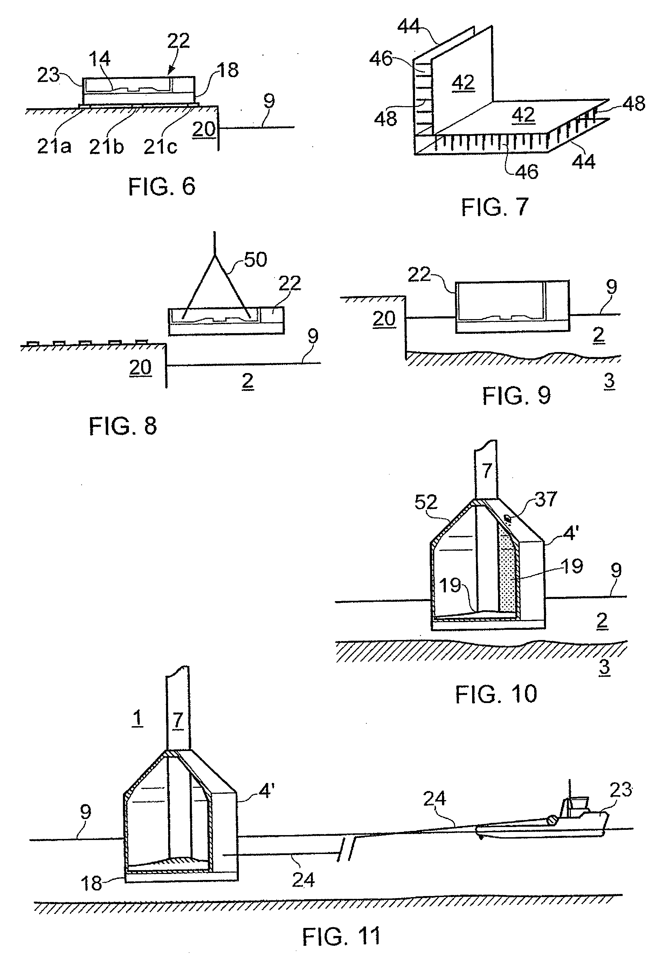

Figure 5 is a vertical section through the foundation 4' along two vertical planes A-A similar to that shown in Fig. 3 for the first embodiment. It is seen the interior 15 of the foundation 4' can be used for ballast, i.e water and/or solid ballast 19 (see figure 10)

The inventive fabrication, transport and installation procedure is illustrated in Figures 6 to 17 and explained in the following.

Fig. 6 shows the first stage of fabrication that takes place on a quayside. However, a similar fabrication procedure and method would be possible by using more expensive facilities such as dry or graving dock, or a submersible barge and by applying very similar procedure and materials. Therefore the further explanation will focus on the quayside fabrication and only comments will be provided, where appropriate, for the other optional fabrication methods. On quayside 20 temporary supports 21a-c are established as necessary to support the lower part 22 of the foundation. This part of the process is similar irrespective of whether the first embodiment foundation 4 or the second embodiment foundation 4' is used. The fabrication of the lower part 22 of the foundation 4, 4', comprises fabrication of outer skirt 18, radial skirts 16a-c (cf. figure 3; not shown in figures 6 and 8 to 17), and pre-assembly of bottom slab element 14 and vertical walls 23 is carried on until a necessary predetermined height of the walls 23 is achieved and at the same time the capacity of load-out device is not exceeded (see explanation related to Figure 8). The required height of the lower walls 23 is governed by the required minimum acceptable freeboard in the next phase in which the structure under construction is floating. In order to achieve as low weight as possible in order to avoid expensive cranes, according to this invention, both the bottom slab element 14 and the vertical walls 23 or their lower part are fabricated as double steel shell structure having an outer shell 44 and an inner shell 42, defining a cavity 46 there between, and where the shells 42, 44 are held in desired distance from each other by transversal spacing plates or rods 48, as shown in figure 7 The cavity 46 is intended to, in a later phase of fabrication, be filled with concrete in order to achieve desirable strength of the completed shell structure. However, the hollow double shell steel structure is designed with strength sufficient to carry all loads occurring in the initial phases of fabrication It is also possible to use prefabricated double shell sections commercially available on the market under brand name ***Bi-Steel.*** The use of this sandwich type of structure may not be required if the fabrication is performed in dock or on a submersible barge where the weight may not be a limiting parameter. Upon completion of the lower part 22 of the foundation 4; 4', it is transferred (e.g. lifted; cf. figure 8) from the quayside 20 into a floating state on a surface of water 2 as shown in Fig. 9. The lifting can be performed using slings 50 attached to a floating or land based crane (not shown).

Upon lowering into water the lower part 22 of foundation 4, 4' floats with an appropriate freeboard that allows safe work with continuation of the fabrication, which may continue either with extending the vertical walls in order to increase the freeboard of the floating body or filling the cavity between the shells by concrete to increase strength of the lower part of the foundation 4; 4' Completion of the foundation 4; 4' involves construction of walls up to their final height and for the foundation 4' shown in figure 4, also constructing the tight roof 52, thus creating a barrier between the internal space 15 and the outside water Construction of the walls up to their final height can either continue with the double-shell configuration or continue using standard concrete structure building methods such as slipforming or the use of conventional formwork and concrete casting. In order to achieve desired weigh and weight distribution, concrete of different density can be used in different sections or concrete can be entirely or in sections replaced by steel. This fabrication phase is shown in Fig. 9 where the lower part of the foundation 22 floats on surface of water mass 2 and construction of walls and other parts inside the foundation is in progress

In Fig 10 the foundation 4' has been completed; the tower 7 has been inserted into the foundation 4', aligned with the foundation 4' and connected to it as necessary, and the complete structure is readied for tow-out. Fig. 10 shows adjustments of the draft and the center of buoyancy that both are important for stability of the complete structure during tow to the site. It is seen that in this selected case solid ballast 19 is being added into the space 15 of the foundation 4' via a suitable opening 37 in the roof structure 52. In the design, the outer dimensions of the foundation 4; 4' are important parameters the design engineer can adjust to control the floating stability. The ultimate goal would be achieving sufficient stability with the tower 7 and equipment units 5, 6a-c installed before tow-out. This may however lead to a cost inefficient solution in which the additional cost for the extended structure cannot counterweigh the technical and economical gains from installing the tower and installing of all equipment and outfitting at the shore fabrication site. Therefore, compromises may be required to be introduced such as.
1. Postpone installation of equipment units 5, 6a-c to the phase where the support structure 4; 4' and tower 7 have been installed at the offshore site. This reduces significantly the height of centre of gravity above the center of buoyancy, reduces the wind loads on the structure during this phase, and reduces the draft during tow
2. Use a telescopic tower (such as disclosed in Norwegian patent application no. 20073363) where the upper part is inserted into the lower part during tow and installation and thereafter retracted (pushed out by hydrostatic pressure) The effects of this are of the same character as in item 1 described above
3. Design and fabricate the tower 7 or its upper part from lighter materials than steel, e.g. from high strength reinforced plastics

Fig. 11 shows the transport of the support structure 1 from the assembly site to the installation site by towage of the structure by means of a towing vessel 23 connected by tow line 24 to the foundation 4'. Depending on the maritime conditions along to towing route, such as ship traffic, tow route curvature, additional vessel(s) may be needed to perform this task.

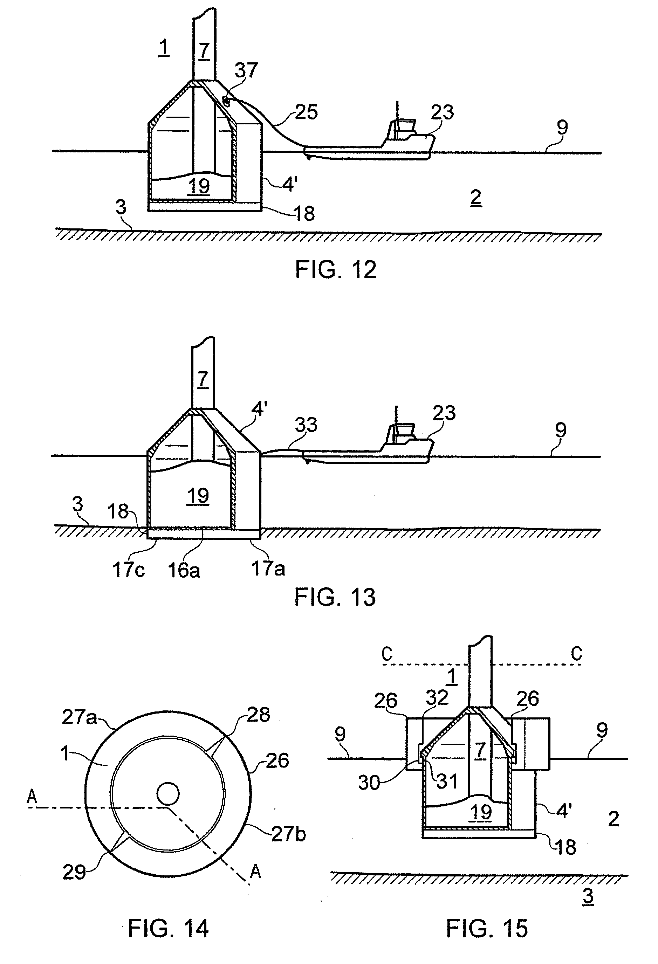

Fig. 12 shows the structure 1 being transferred from the towing position to seabed that is achieved by adding weight (solid ballast 19, or water) into the space 15 of the foundation 4' from the installation vessel 23 via a connection 25

Fig. 13 shows the structure 1 deployed on the seabed 3 with outer skirts 18 and radial skirts 17a,c penetrated into the seabed. The grouting, i.e. filling of voids where is not contact between the base of the foundation 4' and the seabed and, if needed, filling of additional grout in selected compartment(s) 17a-c thus to align the tower 7 with vertical by leveling the foundation 4', is illustrated as being performed by adding grouting substance via a suitable conduit 33 Depending on the initial inclination with the respect to position of the skirt compartments the grout is filled into one or two of the three compartments.

Fig. 14 is top view of the foundation 4' along section line C-C in figure 15, in the region of the water line, and illustrates a floating stability device 26 attached to the foundation 4' The purpose of the floating stability device 26 is to provide additional water plane area to the floating foundation 4'and hence make it stable during tow-out and installation. The floating stability device 26 may be designed as a hollow body, preferably in a shape embracing the structure along its periphery, e g. circular as seen in the figure In the preferred embodiment the device 26 comprises two segments 27a,b connected to each other via a joint 28 and a locking mechanism 29.

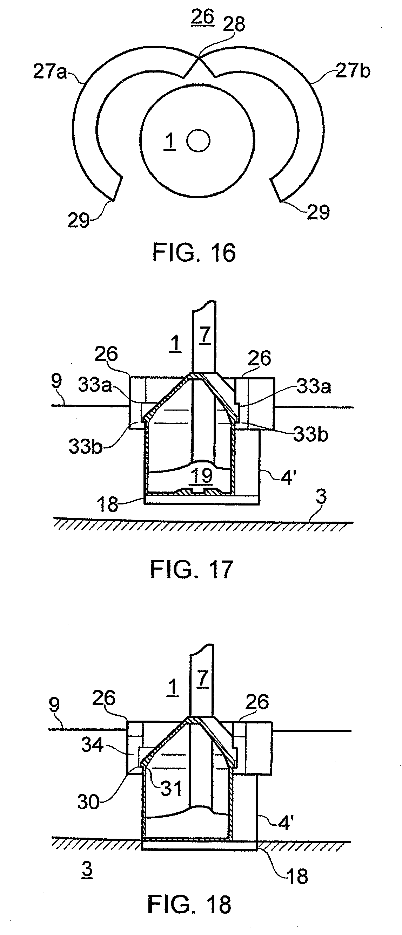

Fig. 16 is a vertical section through a portion of the structure 1, illustrating the foundation 4' and the floating stability device 26 along two vertical planes A - A as defined in Fig. 14. In the cross section it is seen that the foundation 4' is provided with a flange 30 that fits into a recess 31 in the inner wall 32 of the floating stability device 26. Interaction between the floating stability device 26 and the foundation 4' takes place when the foundation 4' is ballasted down so that the flange 30 rests on the recess 31, as shown in figure 17. The typical situations when the floating stability element 26 is needed are (a) tow to site and lowering/ballasting to seabed of top-heavy structure 1 and (b) lowering/ballasting to seabed of structure 1 for deeper water where the vertical wall of the foundation 4' or entire foundation is submerged below water surface 9.

Fig. 16 is a top view of foundation 4' and the floating stability device 26 with its segments 27a,b connected through the hinge 28, looking mechanism 29 disconnected and the segments 27a,b separated so that the device 26 can be maneuvered toward the foundation 4' with aim of embracing the foundation by the segments 27a and 27b. When these are in position, the locking mechanism 29 can be engaged thus creating an assembly that after increasing of draft of the structure 1 behaves as one body from the floating stability point of view.

Fig. 17 shows the lowering of the structure 1 to the seabed 3 being in progress. Ballast is gradually added into the space 15 of the foundation 4' thus the assembly of the structure 1 and the floating stability device 26 is submerging deeper into water. In order to achieve structural strength the device 26 is strengthened by internal reinforcement indicated by structural members 33a and 33b.

In Fig 18 the assembly made of the structure 1 and the floating device 26 has been by adding ballast deployed onto the seabed 3 with the skirts 18 penetrating into it. For detachment from the foundation the floating stability device 26 is outfitted with equipment for ballasting and deballasting by means of sea water. In order to reduce the free surface area of the ballast water inside the floating stability device, the interior of it is divided with vertical bulkheads (not shown). The figure shows that ballast water 34 has been filled into the device so that the device 26 is floating without contact between the recess 30 and the flange 31, hence the floating stability device 26 can be easily disengaged and removed.

The invention is particularly suitable for suitable for shallow waters in particular in the interval between 8 m and 30 m. The system can preferably be designed in the soft-stiff dynamic response regime.

## Claims

1. A support structure for use in the offshore wind farm industry, comprising a foundation (4; 4') for installation on a seabed (3) below a body of water (2) and a tower (7) connected to and extending upwards from the foundation and being capable of supporting at least an equipment unit (5), wherein the foundation (4; 4') further comprises a bottom slab element (14) and a wall (23, 54) extending upwards from the bottom slab element (14), thereby defining a first cavity (15), the first cavity (15) having a volume providing sufficient buoyancy to the foundation (4; 4') for it to be in self-floating suspension in the body of water, said first cavity being adapted to be filled with ballast to a degree that the foundation is displaced to a position on the seabed, **characterised in that** the foundation (4; 4') comprises a circumferential skirt (18) extending downwards from the bottom slab element (14), and defining at least one compartment (17a-c) underneath the foundation (4; 4'), the weight of the foundation, including the ballast, creating a sufficient force for the skirt to penetrate into the seabed so that the outer loads is transferred into deeper soils.

2. The support structure of claim 1, wherein the at least one compartment is subdivided into compartments (17a-c) by means of skirts (16a-c) extending downwards from the bottom slab element (14) and preferably extending radially from a center portion of the bottom slab (14) to respective areas of the circumferential skirt (18).

3. The support structure of claim 1, wherein the tower is connected to the foundation (4, 4') via a lower part (13) of the tower (7) being attached to the bottom slab element (14).

4. The support structure of claim 1 or claim 2, wherein the tower is connected to the foundation (4; 4') via fixing elements (8; 52) connected to at least an upper wall portion (54).

5. The support structure of any of the above claims, wherein the foundation (4') comprises a roof structure (52), extending between the upper wall (54) and the tower (7), thereby enclosing the first cavity (15).

6. The support structure of claim 5, wherein the roof structure (52) comprises an outer shell (44) and an inner shell (42) defining at least one second cavity (46) there between, said inner shell (42) facing the first cavity (15), and wherein the second cavity (46) is filled with a material such as concrete.

7. The support structure of any of the above claims, further comprising a buoyant stabilizing device (26) releasably and slidably connected to the foundation (4'), whereby the stability of the structure (1) is maintained during installation when the roof structure (52) is moved from a position above the water to a fully submerged state.

8. The support structure of claim 7, wherein the buoyant stabilizing device (26) comprises a recessed portion (30) having upper and lower end stops for cooperation with a flange (31) on the foundation (4'), whereby the buoyant stabilizing device (26) slidable movement is restricted by said upper and lower end stops.

9. The support structure of claim 7 or claim 8, wherein the buoyant stabilizing device (26) comprises at least one inner cavity for selective addition and extraction of a ballasting fluid, such as water.

10. The support structure of claim 1, wherein the foundation has an opening for adding solid ballast into the first cavity.

11. A method of installing a support structure for use in the offshore wind farm industry, comprising a foundation (4; 4') for installation on a seabed (3) below a body of water (2) and a tower (7) connected to and extending upwards from the foundation and being capable of supporting at least an equipment unit (5), including the steps of:
a) towing the structure (1) in an upright floating state to the installation location while controlling the buoyancy and center of gravity of the support by means of a controlled addition of a ballast material into a cavity (15) defined by structural elements of the support structure, whereby the need for separate buoyancy elements and/or specialized vessels during transport is eliminated or significantly reduced, and
b) transferring the structure (1) from a floating state to an installed state, by filling a ballast material into the cavity (15) until the structure is installed on the seabed (3), whereby the need for separate buoyancy elements and/or specialized vessels and cranes during installation is eliminated or significantly reduced,
c) **characterised by**
d) adding ballast having a sufficient weight to let a downward facing skirt, extending around the circumference of the foundation, penetrate the seabed so that the outer loads is transferred into deeper soils.

12. The method of claim 11, wherein the support structure is moved into a substantially level state on the seabed by injecting a grouting material into selected ones of compartments (17a-c) confined by skirts (18, 16a-c) below a bottom slab element (14) of the support structure.

13. The method of claim 11 or claim 12, wherein the ballast material which is added in step a), comprises a solid material.

14. The method of any one of claims 11 - 13, wherein the filling in step b) comprises the filling, at least partly, of water or a solid material (19) or a combination of both.

## Patentansprüche

1. Stützstruktur zur Verwendung in der Offshore-Windpark industrie, umfassend ein Fundament (4; 4') zur Installation auf einem Meeresboden (3) unterhalb eines Wasserkörpers (2) und einem Turm (7), welcher mit dem Fundament verbunden ist und sich vom Fundament nach oben erstreckt und zumindest eine Ausrüstungseinheit (5) abstützen kann, wobei das Fundament (4; 4') des Weiteren ein Bodenplattenelement (14) und eine sich vom Bodenplattenelement (14) nach oben erstreckende Wand (23, 54) umfasst, wodurch eine erste Aushöhlung (15) definiert ist, wobei die erste Aushöhlung (15) ein Volumen aufweist, welches dem Fundament (4; 4') einen ausreichenden Auftrieb verleiht, so dass es selbstschwimmend im Wasserkörper schweben kann, wobei die erste Aushöhlung mit Ballast bis zu einem Maß gefüllt werden kann, so dass das Fundament in eine Position auf dem Meeresboden verlagert werden kann, **dadurch gekennzeichnet, dass** das Fundament (4; 4') eine umlaufende Einfassung (18) umfasst, welche sich vom Bodenplattenelement (14) nach unten erstreckt und zumindest ein Abteil (17a-c) unterhalb des Fundaments (4; 4') definiert, wobei das Gewicht des Fundaments einschließlich des Ballasts eine ausreichende Kraft erzeugt, um die Einfassung in den Meeresboden zu drücken, so dass die äußeren Lasten in tiefere Bodenschichten übertragen werden.

2. Stützstruktur nach Anspruch 1, wobei das zumindest eine Abteil in Abteile (17a-c) mittels Einfassungen (16a-c) unterteilt ist, welche sich nach unten vom Bodenplattenelement (14) erstrecken und sich vorzugsweise radial von einem zentralen Abschnitt der Bodenplatte (14) zu den entsprechenden Bereichen der umlaufenden Einfassung (18) erstrecken.

3. Stützstruktur nach Anspruch 1, wobei der Turm über einen unteren Teil (13) des Turms (7) mit dem Fundament (4; 4') verbunden ist, welcher am Bodenplattenelement (14) angebracht ist.

4. Stützstruktur nach Anspruch 1 oder Anspruch 2, wobei der Turm mit dem Fundament (4; 4') mittels Befestigungselementen (8; 52) mit zumindest einem oberen Wandabschnitt (54) verbunden ist.

5. Stützstruktur nach einem der obigen Ansprüche, wobei das Fundament (4') eine Dachstruktur (52) umfasst, welche sich zwischen der oberen Wand (54) und dem Turm (7) erstreckt, wodurch die erste Aushöhlung (15) umschlossen wird.

6. Stützstruktur nach Anspruch 5, wobei die Dachstruktur (52) eine äußere Hülle (44) und eine innere Hülle (42) umfasst, welche zumindest eine zweite Aushöhlung (46) dazwischen definieren, wobei die innere Hülle (42) der ersten Aushöhlung (15) zugewandt ist und wobei die zweite Aushöhlung (46) mit einem Material, wie Beton, gefüllt ist.

7. Stützstruktur nach einem der obigen Ansprüche, des weiteren umfassend eine Auftriebsstabilisierungsvorrichtung (26), welche lösbar und gleitbar mit dem Fundament (4') verbunden ist, wodurch die Stabilität des Aufbaus (1) während der Installation aufrechterhalten wird, wenn die Dachstruktur (52) von einer Position oberhalb des Wassers in eine vollständig untergetauchten Zustand bewegt wird.

8. Stützstruktur nach Anspruch 7, wobei die Auftriebsstabilisierungsvorrichtung (26) einen Ausnehmungsabschnitt (30) umfasst, welcher obere und untere Endanschläge zum Zusammenwirken mit einem Flansch (31) am Fundament (4') umfasst, wobei eine Gleitbewegung der Auftriebsstabilisierungsvorrichtung (26) durch die oberen und unteren Endanschläge begrenzt wird.

9. Stützstruktur nach Anspruch 7 oder Anspruch 8, wobei die Auftriebsstabilisierungsvorrichtung (26) zumindest eine innere Aushöhlung zum wahlweisen Hinzufügen oder Entfernen von Ballastflüssigkeit, wie Wasser, umfasst.

10. Stützstruktur nach Anspruch 1, wobei das Fundament eine Öffnung zum Hinzufügen festen Ballasts in die erste Aushöhlung aufweist.

11. Verfahren zur Installation einer Stützstruktur zur Verwendung in der Offshore-Windparkindustrie, umfassend ein Fundament (4; 4') zur Installation auf einem Meeresboden (3) unterhalb eines Wasserkörpers (2) und einen Turm (7), welcher mit dem Fundament verbunden ist und sich vom Fundament nach oben erstreckt und zumindest eine Ausrüstungseinheit (5) abstützen kann, enthaltend die folgenden Schritte:
a) Schleppen der Struktur (1) in einem aufrecht schwimmenden Zustand zum Installationsort, wobei der Auftrieb und der Schwerpunkt der Stütze mittels kontrollierten Hinzufügens eines Ballastmaterials in eine Aushöhlung (15) gesteuert wird, welche durch Strukturelemente der Stützstruktur definiert ist, wobei die Notwendigkeit für separate Auftriebselemente und/oder spezialisierte Schiffe während des Transports entfällt oder wesentlich reduziert wird, und
b) Überführen der Struktur (1) von einem schwimmenden Zustand in einen installierten Zustand durch Füllen eines Ballastmaterials in die Aushöhlung (15) bis die Struktur auf dem Meeresboden (3) installiert ist, wobei die Notwendigkeit für separate Auftriebselemente und/oder spezialisierte Schiffe und Kräne während der Installation entfällt oder wesentlich reduziert wird,
c) **dadurch gekennzeichnet, dass**
d) Ballast mit einem ausreichenden Gewicht hinzugefügt wird, so dass eine nach unten weisende Einfassung, welche sich um den Umfang des Fundaments erstreckt, in den Meeresboden gedrückt wird, so dass äußere Lasten in die tieferen Bodenschichten übertragen werden.

12. Verfahren nach Anspruch 11, wobei die Stützstruktur in einem im Wesentlichen waagerechten Zustand auf dem Meeresboden durch Injizieren eines Vergussmaterials in ausgewählte Abteile (17a-c) bewegt wird, welche durch Einfassungen (18, 16a-c) unterhalb eines Bodenplattenelements (14) der Stützstruktur begrenzt werden.

13. Verfahren nach Anspruch 11 oder Anspruch 12, wobei das beim Schritt a) hinzugefügte Ballastmaterial festes Material umfasst.

14. Verfahren nach einem der Ansprüche 11-13, wobei die Füllung beim Schritt b) das Füllen, zumindest teilweise, mit Wasser oder einem festen Material (19) oder einer Kombination davon umfasst.

## Revendications

1. Structure de support destinée à être utilisée dans l'industrie des fermes éoliennes offshore, comprenant une fondation (4, 4') pour installation sur un fond marin (3) en dessous d'une masse d'eau (2) et une tour (7) reliée à la fondation et s'étendant vers le haut à partir de celle-ci et pouvant supporter au moins une unité d'équipement (5), dans laquelle la fondation (4, 4') comprend de plus un élément de dalle de fond (14) et une paroi (23, 54) s'étendant vers le haut à partir de l'élément de dalle de fond (14), définissant ainsi une première cavité (15), la première cavité (15) ayant un volume fournissant une flottabilité suffisante à la fondation (4, 4') pour qu'elle soit en suspension auto-flottante dans la masse d'eau, la première cavité étant adaptée pour être remplie d'un ballast jusqu'à un degré tel que la fondation est déplacée vers une position sur le fond marin, **caractérisée en ce que** la fondation (4, 4') comprend une jupe circonférentielle (18) s'étendant vers le bas à partir de l'élément de dalle de fond (14) et définissant au moins un compartiment (17a à 17c) en dessous de la fondation (4, 4'), le poids de la fondation, y compris le ballast, créant une force suffisante pour que la jupe pénètre dans le fond marin de sorte que les charges extérieures soient transférées dans des sols plus profonds.

2. Structure de support selon la revendication 1, dans laquelle le au moins un compartiment est subdivisé en compartiments (17a à 17c) par l'intermédiaire de jupes (16a à 16c) s'étendant vers le bas à partir de l'élément de dalle de fond (14) et s'étendant de préférence radialement à partir d'une partie centrale de la dalle de fond (14) vers des surfaces respectives de la jupe circonférentielle (18).

3. Structure de support selon la revendication 1, dans laquelle la tour est reliée à la fondation (4, 4') par une partie inférieure (13) de la tour (7) fixée sur l'élément de dalle de fond (14).

4. Structure de support selon les revendications 1 ou 2, dans laquelle la tour est reliée à la fondation (4, 4') par l'intermédiaire d'éléments de fixation (8 ; 52) reliés à au moins une partie de paroi supérieure (54).

5. Structure de support selon l'une quelconque des revendications précédentes, dans laquelle la fondation (4, 4') comprend une structure de toit (52), s'étendant entre la paroi supérieure (54) et la tour (7), fermant ainsi la première cavité (15).

6. Structure de support selon la revendication 5, dans laquelle la structure de toit (52) comprend une enveloppe extérieure (44) et une enveloppe intérieure (42) définissant au moins une seconde cavité (46) entre elles, l'enveloppe intérieure (42) étant en vis-à-vis de la première cavité (15), et dans laquelle la seconde cavité (46) est rempli d'un matériau tel que du béton.

7. Structure de support selon l'une quelconque des revendications précédentes, comprenant de plus un dispositif de stabilisation de la flottaison (26) relié de manière libérable et coulissante à la fondation (4') de sorte que la stabilité de la structure (1) est maintenue pendant l'installation lorsque la structure de toit (52) est déplacée depuis une position au-dessus de l'eau jusqu'à un état entièrement immergé.

8. Structure de support selon la revendication 7, dans laquelle le dispositif de stabilisation de la flottaison (26) comprend une partie creusée (30) ayant des butées d'extrémité supérieures et inférieures pour coopérer avec un rebord (31) de la fondation (4'), de sorte qu'un mouvement coulissant du dispositif de stabilisation de la flottaison (26) est limité par les butées d'extrémité supérieures et inférieures.

9. Structure de support selon les revendications 78, dans laquelle le dispositif de stabilisation de la flottaison (26) comprend au moins une cavité intérieure pour l'ajout et l'évacuation sélective d'un fluide de ballast, tel que de l'eau.

10. Structure de support selon la revendication 1, dans laquelle la fondation comprend une ouverture pour ajouter du ballast solide dans la première cavité.

11. Procédé d'installation d'une structure de support destinée à être utilisée dans l'industrie des fermes éoliennes offshore, comprenant une fondation (4, 4') pour installation sur un fond marin (3) en dessous d'une masse d'eau (2) et une tour (7) reliée à la fondation et s'étendant vers le haut à partir de celle-ci et pouvant supporter au moins une unité d'équipement (5), comprenant les étapes consistant à :
a) remorquer la structure (1) dans un état flottant verticalement jusqu'à l'emplacement d'installation tout en commandant la flottabilité et le centre de gravité du support par l'intermédiaire d'un ajout commandé d'un matériau de ballast dans une cavité (15) définie par des éléments de structure de la structure de support, de sorte que le besoin d'éléments de flottabilité séparés et/ou de navires spécialisés pendant le transport est éliminé ou nettement réduit, et
b) transférer la structure (1) depuis un état flottant jusqu'à un état installé, en remplissant un matériau de ballast dans la cavité (15) jusqu'à ce que la structure soit installée sur le fond marin (3), de sorte que le besoin d'éléments de flottabilité séparés et/ou de navires spécialisés et de grues pendant l'installation est éliminé ou nettement réduit,
c) **caractérisé par**
d) l'ajout de ballast ayant un poids suffisant pour laisser une jupe dirigée vers le bas, s'étendant autour de la circonférence de la fondation, pénétrer dans le fond marin de sorte que les charges extérieures sont transférées dans des sols plus profonds.

12. Procédé selon la revendication 11, dans lequel la structure de support est déplacée dans un état sensiblement de niveau sur le fond marin par injection d'un matériau de remplissage dans ceux des compartiments sélectionnés des compartiments (17a à 17c) délimités par des jupes (18, 16a à 16c) en dessous d'un élément de dalle de fond (14) de la structure de support.

13. Procédé selon les revendications 11 ou 12, dans lequel le matériau de ballast qui est ajouté à l'étape a), est constitué d'un matériau solide.

14. Procédé selon l'une quelconque des revendications 11 à 13, dans lequel le remplissage de l'étape b) comprend le remplissage, au moins partiellement, d'eau ou d'un matériau solide (19) ou d'une combinaison des deux.
